# EUROPEAN PATENT SPECIFICATION

(11) **EP 1 454 286 B1**
(45) Date of publication and mention of the grant of the patent: **16.08.2006**
(21) Application number: 02786315.8
(22) Date of filing: 12.11.2002
(51) Int. Cl.: G06K 9/00, G07C 9/00

(54) **METHOD AND DEVICE FOR MATCHING FINGERPRINTS**
VERFAHREN UND EINRICHTUNG ZUM VERGLEICHEN VON FINGERABDRÜCKEN
PROCEDE ET DISPOSITIF PERMETTANT DE COMPARER DES EMPREINTES DIGITALES

(30) Priority: 12.11.2001 SE 0103738; 16.11.2001 US 331444 P
(43) Date of publication of application: 08.09.2004
(73) Proprietor: Precise Biometrics AB, 224 64 Lund (SE)
(72) Inventor: NILSSON, Jonas, S-222 22 Lund (SE)
(74) Representative: Andersson, Björn E.
(86) International application number: PCT/SE2002/002052
(87) International publication number: WO 2003/042906

(56) References cited:
- EP-A1- 0 791 891
- EP-A2- 0 848 346
- US-A- 5 067 162
- US-B1- 6 241 288

## Description

### Related Applications

This application claims the benefit of the Swedish patent application No. 0103738-1 filed on November 12, 2001 and U.S. provisional patent application No. 60/331,444 filed on November 16, 2001.

### Field of the Invention

The present invention relates generally to checking of fingerprints and more particularly to a method for checking if a current fingerprint belongs to a person for whom reference fingerprint data has previously been stored, which reference fingerprint data includes a plurality of partial areas, which are designated as reference partial areas, of a digital representation of the person's fingerprint, in which method at least some of the reference partial areas are compared with corresponding current partial areas of a digital representation of the current fingerprint, which current partial areas are larger than the reference partial areas, in order to check their likeness. The invention further relates to a device which can be used for carrying out the method.

### Background to the Invention

It has long been known that every individual has unique fingerprints and that fingerprints can therefore be used to identify individuals. For example, it has been possible to identify criminals by comparing the fingerprints left behind at scenes of crime with previously recorded fingerprints from known criminals.

In more recent years, fingerprints have also started to be used to verify a person's identity, i.e. to check if a person is the person he or she claims to be. In this case, a current fingerprint from the person is compared with a previously recorded reference fingerprint from the person he or she claims to be. The verification can take place, for example, when the person wishes to gain entry to a building or premises, when the person wishes to make a financial transaction, or when the person wishes to gain access to sensitive information.

To prevent deceptions, it is important to ensure that the reference fingerprint is stored in a safe manner and that the comparison between the current fingerprint and the reference fingerprint takes place in such a way that the fingerprint information does not become accessible to unauthorized persons. A known way of doing this is to store the reference fingerprint on a personal active card, a so-called smart card, or on some other type of personal portable data carrier which includes a processor, and to carry out the comparison between the current fingerprint and the reference fingerprint on the smart card or the data carrier.

A fingerprint contains a large amount of information. For this reason, it is usual not to store and compare complete fingerprints, but only information of special interest which has been extracted from the fingerprints. A very common technique is to extract features (also called minutia points) from the finger print. Features are normally points in the fingerprint where the fingerprint lines divide or join. Other types of features may also occur. Instead of a complete reference fingerprint, a "map" is stored which shows where features occur, possibly supplemented by an indication of the type of feature. During verification, features are extracted from the current fingerprint and are compared with the reference feature data in order to check if the features occur at the same locations in the fingerprints.

Another known technique involves using entire partial areas of the fingerprint instead of just individual points on the latter. During verification, the partial areas of the reference fingerprint are compared with corresponding partial areas of the current fingerprint. The present invention concerns fingerprint checking which uses partial areas.

A problem associated with the use of partial areas is that the person whose identity is to be verified often does not place his finger in the same position on the sensor, when the current fingerprint is being recorded, as when the reference fingerprint was recorded. This problem can be solved by comparing each partial area of the reference fingerprint with each conceivable partial area of the same size within the current fingerprint. However, such a comparison takes too long to carry out on a smart card which normally has a processor of fairly low capacity.

A solution to this problem is described in PCT/SE01/00210 which is assigned to the present applicant. The solution lies in transferring a reference partial area from the smart card, on which the reference partial areas are stored, to a computer with better processor capacity. The computer compares the reference partial area with the current fingerprint in order to determine whether, and if so in which position of translation and rotation, the reference partial area matches the current fingerprint. When this position has been determined, the computer knows how the current fingerprint is translated and rotated in relation to the reference fingerprint. Knowing how other partial areas in the reference fingerprint are placed in relation to the matching partial area, the computer can select corresponding partial areas in the current fingerprint and transfer these to the smart card. To compensate for the fact that the person may have pressed his finger against the sensor with different pressure when recording the current fingerprint and the reference fingerprint and may thus have deformed the fingerprint to different extents, the current partial areas are chosen to be slightly larger than the partial areas in the reference fingerprint. The final comparison between the partial areas can now be carried out on the smart card in a small number of relative positions, and the comparison can therefore be carried out in a reasonable time despite the low capacity of the smart card's processor.

More precisely, each reference partial area is compared with corresponding current partial areas in all conceivable relative positions where the reference partial area overlaps the current partial area entirely. The comparison is carried out, for example, from the upper left corner and line by line down to the lower right corner. For each relative position, it is determined how well the reference partial area corresponds with that part of the current partial area which it overlaps. The result can be obtained, for example, as a score which reflects the number of overlapping pixels which are identical. When the partial areas have been compared in all relative positions, a check is made to ascertain if the highest score exceeds a threshold value. If this is the case, the reference partial area is considered to match the current partial area. All the reference partial areas are matched with their respective current partial areas in this way and the number of matching partial areas is determined. Finally, the number of matching partial areas is compared with a threshold value. If this is reached, the current fingerprint is considered to come from the same person as the reference fingerprint, and the identity of the person from whom the current fingerprint was recorded is considered as verified.

The method described above has been implemented with good results on smart cards which directly execute the program code on the smart card. However, there are other types of smart cards, for example the JAVA card and the Multos card, on which the processor, before execution, interprets and converts the program code to the form in which it is to be executed. Such cards are slower than the cards which directly execute the program code and, even with the method described above, it takes too long to carry out the comparison between the reference fingerprint and the current fingerprint. The applicant has attempted to solve this problem by reducing the ratio between the size of the current partial areas and the size of the reference partial areas. However, this has not given an acceptable processing time. Indeed, because of the above-mentioned deformation, the size ratio cannot be made too small since the verification is then unsuccessful for too many of the persons for whom it ought to succeed. The false rejection rate (FRR) is therefore too high.

US 5,067,162 discloses a method and apparatus for verification of personnel identity by correlation of fingerprint images, wherein, according to an alternative embodiment, the matching process is interrupted as soon as a sufficiently high correlation value is achieved, and wherein the search area is expanded in stages until the best-match location is found. A disadvantage associated with the method and apparatus of US 5,067,162 is that where the correlation value does not reach the predetermined level, the search areas will be expanded, whereby the time required to reject a non-matching fingerprint will be very long.

### Summary of the Invention

A general object of the present invention is therefore to wholly or partially remedy the above-mentioned problems.

A more particular object is to provide a method of comparing reference partial areas with current partial areas in a more rapid manner than has been described above.

These and other objects which will become evident from the following description are achieved with a method and a device according to the appended claims.

According to a first aspect of the invention, the latter thus relates to a method having the features of claim 1.

Thus, previously, an exhaustive comparison was carried out between the reference partial area and the current partial area in order to determine in which relative position the reference partial area best agreed with the current partial area. Thereafter, a check was made to ascertain if a predetermined requirement of likeness was satisfied. According to the invention, instead of carrying out an exhaustive comparison, the comparison is interrupted as soon as a relative position is found in which the predetermined requirement of likeness is satisfied. There may therefore be other relative positions in which the likeness is greater, but this is disregarded since the requirement of likeness has already been satisfied. In this way, on average far fewer comparisons have to be made between the reference area and the current area. It is only if no relative position is found in which the likeness requirement is satisfied that it is necessary for all relative positions to be compared. The result of this is a considerable saving in time.

It should be emphasized that the reference partial area and the current partial area need not be compared in all conceivable relative positions, but only in predetermined positions.

A further saving in time can be achieved if the comparison is begun in the relative position where it is most probable that the first predetermined requirement of likeness will be satisfied. The comparison ought in principle to be carried out in the "order of probability" so that as few as possible relative positions have to be compared.

The current partial areas can be larger than the reference partial areas. However, the method could also be used for reference partial areas that are larger than the current partial areas. It could even be used when comparing partially overlapping parts of reference partial areas and current partial areas of the same size.

The current partial areas can be chosen so that they are symmetrical in relation to the areas which correspond to the reference partial areas in the current fingerprint. The comparison should be carried out for relative positions where the reference partial area is situated near the center of the current partial area before relative positions where the reference partial area is situated at the edges of the current partial area. It has in fact been found that the user more often does not deform his finger than does deform it. Thus, a relative position in which the likeness requirement is satisfied is on average found more quickly if the search is begun with the reference partial area placed in positions near the center of the current partial area. Of course, the speed of matching will not be affected to a very great extent if the matching is begun with a single comparison at the edge of the current partial area. The important thing is that the comparisons with the reference partial area near the center point of the current partial area must be made at as early a stage as possible.

It will probably be quickest if the comparison is begun with the reference partial area centered in relation to the current partial area and if it is continued with altered relative positions where the reference partial area is centered as much as possible in relation to the current partial area. A comparison which is carried out in a spiral shape has proven expedient and satisfies the above-mentioned criterion.

When a first reference partial area has been compared with a first current partial area, the checking preferably continues with a new reference partial area and the corresponding current partial area. After each pair of a reference partial area and a current partial area, a check is made to ascertain if a predetermined number of reference partial areas which match their respective current partial areas have been recorded. If such is the case, the check is interrupted because the checked person's identity is then considered as verified.

The reference partial areas are compared with the current partial areas in two phases, the second phase being carried out only if the comparison of the reference partial areas with the current partial areas in the first phase indicates that the current fingerprint belongs to the same person as the reference fingerprint data.

The comparison in two phases is carried out in such a way that, upon each comparison of a reference partial area and a current partial area, the first phase is carried out and then, if appropriate, the second phase. Alternatively, the first phase can first be carried out for all the partial areas and thereafter, if appropriate, the second phase.

The aim of the first phase is to be able to quickly reject current partial areas or fingerprints which have very little likeness to the reference fingerprint data.

The speed is achieved by the fact that the comparison in the first phase is carried out with the aid of only a sub-area of each compared reference partial area, whereas the comparison in the second phase is carried out for complete reference partial areas: Because it is already possible, during the first phase, to reject those partial areas or fingerprints for which each reference partial area needs to be compared with a corresponding current partial area in all relative positions because of insufficient likeness; a great deal of time is saved in the second phase, which in itself is more time-consuming than the first one.

The comparison in the first phase can be carried out in the same way as has been described above for the second phase. Thus, for example, the comparison between reference sub-areas and current partial areas can be carried out in a spiral shape, and the comparison between a reference partial area and a current partial area can be interrupted immediately when a first predetermined requirement of likeness is achieved. However, the first predetermined requirement of likeness can be lower than it is in the second phase so that the FRR can be kept low. For example, the likeness requirement in the first phase can be that about 60% of the overlapping pixels must correspond, whereas the likeness requirement in the second phase can be that about 70% of the overlapping pixels must correspond.

If the first phase is carried out for the whole fingerprint before the second phase is optionally carried out, it is also possible for the whole check in the first phase to be interrupted as soon as a sufficient number of matching reference partial areas have been recorded.

The method described above can be realized with the aid of a processor and a computer program. It can of course also be realized with specially adapted hardware, such as an ASIC (Application Specific Integrated Circuit) or an FPGA (Field Programmable Gate Array) or with some suitable combination of analog and/or digital circuits.

The computer program can be stored and/or distributed on a storage medium, which can be any commercially available storage medium, such as a ROM, a RAM, an optical disc memory, a magnetic memory, or a propagating signal.

It must be noted that when the method described above was implemented on a Java card instead of the previously known method, the processing time was able to be reduced by a power of ten.

According to a second aspect, the invention relates to a device having the features of claim 14.

The device can be any type of device in which there is a need for rapid comparison between reference partial areas and current partial areas. It can be a portable data carrier of any type, for example a mobile telephone or a PDA. It can also be a smart card, and in particular a smart card in which the processor interprets the program code before it is executed, for example a smart card of the Java type.

The signal processing unit comprises means for carrying out the different steps of the above-described method.

### Brief Description of the Drawings

The present invention will now be described in more detail by means of an embodiment and with reference to the accompanying drawings, in which
Fig. 1 shows schematically a system in which the present invention can be implemented;
Figs 2a and 2b show schematically a reference fingerprint and a current fingerprint, respectively, with marked partial areas;
Fig. 3 shows schematically how a reference partial area can be compared with a current partial area;
Fig. 4 is a flow chart and shows how a reference partial area can be compared with a current partial area in two phases;
Fig. 5 is a flow chart and shows an example of a complete fingerprint check which is carried out without a preliminary check by means of sub-areas.

### Description of a Detailed Embodiment

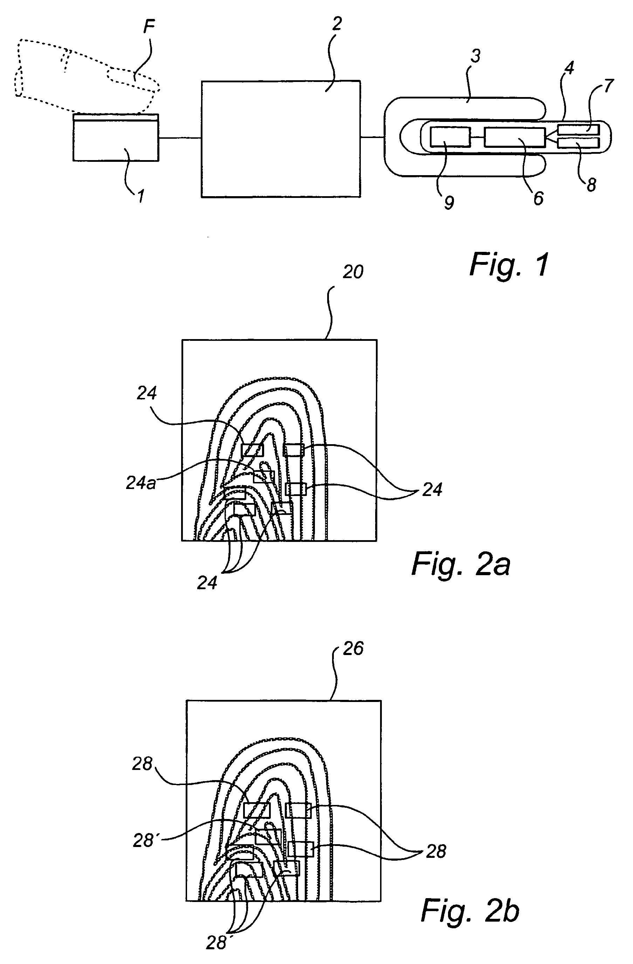

Fig. 1 shows a system for checking fingerprints. The system comprises a fingerprint sensor 1, a computer unit 2, a smart card reader 3 and a smart card 4.

The sensor 1 can, but does not need to, be used both for recording reference fingerprints and for recording current fingerprints. It can be optical, capacitive, thermal or some other suitable type. It can be an area sensor or a line sensor. It can also be autonomous or integrated with the computer unit 2 or the smart card reader 3 or the smart card 4.

The computer unit 2 can be a conventional general computer, for example a PC. Alternatively, it can be a computer unit 2 which is specially adapted for this application.

The smart card reader 3 can be any commercially available smart card reader. Alternatively, it can be a specially adapted smart card reader. It can be an autonomous unit or integrated with the computer unit 2.

The smart card 4 can be any type of smart card on which a comparison of fingerprint data is to be carried out. The smart card has a signal-processing unit which comprises a processor 6, a memory 7 for storing reference fingerprint data extracted from a reference fingerprint from the owner of the smart card, and a working memory 8, and also communication circuits 9 which permit communication between the smart card reader 3 and the smart card 4. The communication circuits 9 may, although not necessarily, require physical contact between the smart card and the reader.

The reference fingerprint data on the smart card may comprise a public part, which may be retrieved from the smart card and used in an external unit, and a private part which is stored in a protected way on the card and which consequently never leaves the smart card. The public part may comprise one partial area of a reference fingerprint, whereas the private part may comprise several partial areas thereof.

Briefly, the system can function in the following way when the identity of the owner of the smart card is to be verified. The owner of the smart card places the smart card 4 in the smart card reader 3 and places his finger F, which is indicated by broken lines in Fig. 1, on the fingerprint sensor 1 which records a current digital image of the finger. Via the smart card reader 3, the computer unit 2 reads the public part of the reference fingerprint data from the smart card. With the aid of this public part of the data, the computer establishes how the current image is rotated and translated in relation to the reference fingerprint data. It also selects current partial areas from the current image of the fingerprint. These current partial areas essentially depict the same parts of the fingerprint as the reference partial areas which are stored on the smart card in the private part of the reference fingerprint data. The current partial areas are, in this example, slightly larger than the reference partial areas in order to compensate for the fact that the finger may have been pressed harder against the sensor upon recording of the current image than it was upon recording of the reference fingerprint. By way of example, the reference partial areas can be 24 x 24 pixels, whereas the current partial areas can be 30 x 32 pixels.

The current partial areas are sent to the smart card 4 where the processor 6 compares the reference partial areas with the current partial areas in order to determine whether these are from the same fingerprint.

Fig. 2a shows schematically a digital image 20 of a reference fingerprint. A number of reference partial areas 24 have been marked on the reference fingerprint. A reference partial area 24a can be the public reference partial area.

Fig. 2b shows schematically a digital image 26 of a current fingerprint from the same person. For the sake of simplicity, it has here been assumed that the finger was situated in exactly the same position on the sensor when the image of the current fingerprint was taken and when the image of the reference fingerprint was taken. A number of current partial areas 28 have been marked in the image of the current fingerprint. It will be seen that these are slightly larger than the reference partial areas, but that they cover the same partial areas in the fingerprint.

Since each reference partial area 24 in this example is smaller than the corresponding current partial area 28, the reference partial area, during the comparison on the smart card, must be compared with the current partial area in a plurality of different relative positions in order to determine whether the reference partial area corresponds to any area within the current partial area.

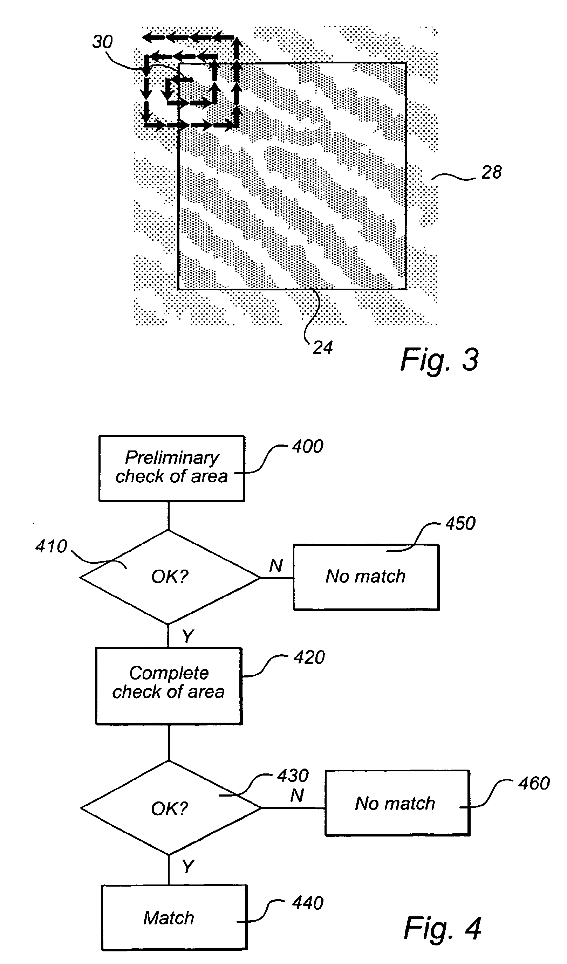

Fig. 3 shows schematically how the comparison between a reference partial area 24 and a current partial area 28 proceeds. The comparison takes place first in a relative position in which the reference partial area is centered in relation to the current partial area, i.e. in the relative position which is shown in Fig. 3. Thereafter, the reference partial area is moved one step, i.e. one pixel, to the left in relation to the current partial area, as is shown by the arrow 30. In the next step, the reference partial area is moved one step downwards. Then two steps to the right, two steps upwards, three steps to the left and so on, so that the reference partial area is moved in relation to the current partial area in a spiral shape. The comparison is completed in a number of relative positions where the reference partial area 24 is situated at the edge of the current partial area 28. It can, however, be carried out in fewer relative positions.

Each of the reference partial areas can be compared with its corresponding current partial area in the manner shown in Fig. 3. This applies also to the preliminary check described below.

The comparison between each reference partial area 24 and its corresponding actual partial area 28 can take place by means of each pair of overlapping pixels being compared and a point being added to a score depending on how similar the pixel values are. The partial areas normally consist of bit maps in which each pixel can only assume the value 0 or 1. If the overlapping pixels both have the same value, the score can for example be increased by 1, whereas, if the overlapping pixels have different values, no point is added to the score. When all pairs of overlapping pixels have been checked, the score obtained is compared with a threshold value which represents a predetermined requirement of likeness. If the score is above the threshold value, the requirement of likeness between the partial areas is satisfied and the reference partial area is considered to match the current partial area in the relative position in which they were compared. If the number of reference partial areas which match their respective current partial areas is greater than a predetermined threshold value, the current fingerprint is considered to come from the same person as the reference fingerprint data.

Before the check proper to ensure whether a reference partial area matches a current partial area, it is possible to carry out a preliminary check or a first phase of the verification. The aim of this preliminary check is to quickly establish that a reference partial area does not match a current partial area, so that the complete check or the second phase of the verification, which all the same requires a great many calculations, does not need to be carried out if it is obvious that the reference partial area and the current partial area are very different. The preliminary check is carried out in the same way as the check proper, but only a part of the reference partial areas are used in the comparison, for example a sub-area at the center of each reference partial area which has about 50%-10% of the surface of the reference partial area. In the above-mentioned example, with a reference partial area of 24 x 24 pixels, a sub-area of 8 x 8 pixels can be used, for example, for the preliminary check. This reference sub-area is compared with a sub-area of the current partial area. In this example, the current sub-area can be 12 x 12 pixels. There is also a lower requirement of likeness, i.e. a lower threshold value, for a reference partial area to be considered to match a current partial area. The reason for this is that there must be little risk of rejection of a current fingerprint which belongs to the same person as the reference fingerprint data. In other words, the aim is to have a low FRR. The overall method for comparison of a reference partial area and a current partial area is summarized in the flow chart in Fig. 4. A preliminary check or a first phase is carried out first, step 400. If this is OK, step 410, i.e. if the likeness requirement is satisfied, the complete check proper or second phase is carried out, step 420. If this is OK, step 430, i.e. if the likeness requirement is satisfied, the reference partial area is considered to match the current partial area, step 440. If, by contrast, the preliminary check or the complete check is not OK, i.e. if the likeness requirement is not satisfied, the reference partial area is considered not to match the current partial area, steps 450 and 460.

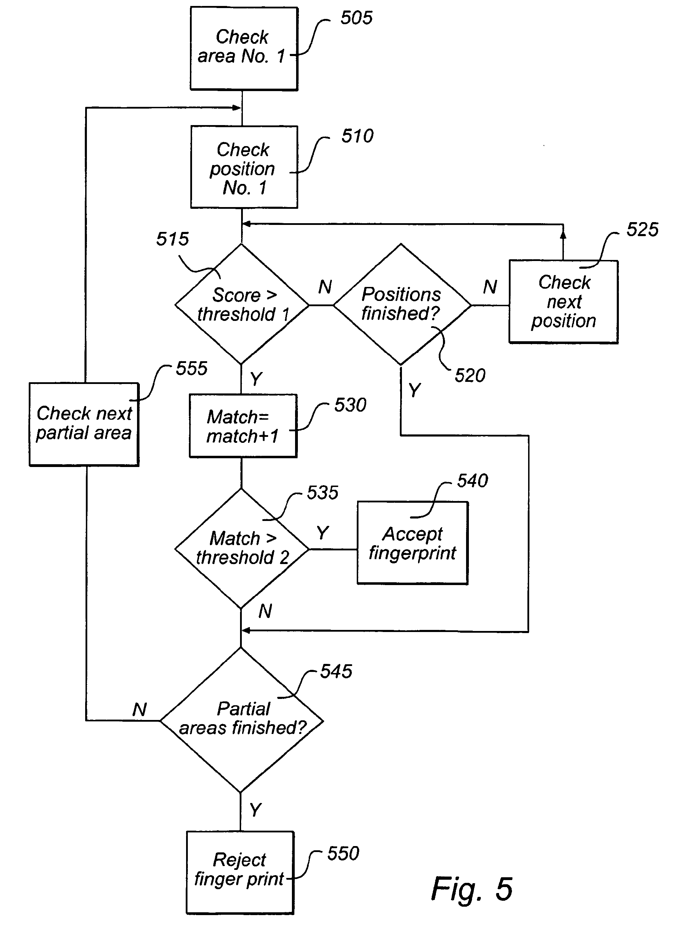

An example of how the complete fingerprint check can be carried out will now be described with reference to the flow chart in Fig. 5, which however shows an embodiment without preliminary check.

The check begins with a first reference partial area and a corresponding current partial area being checked, step 505. The partial areas are first compared in a first relative position, step 510. Thereafter, a check is made to ascertain if the score which the comparison yields is greater than a first threshold value "Threshold 1", step 515. If this is not the case, a check is made to ascertain if all relative positions have been checked, step 520. If this is not the case, the next relative position is checked, step 525, and the flow returns to step 515. If the check of the score in step 515 shows that the score is greater than or equal to the first threshold value, the check of the current partial area is interrupted immediately. The reference partial area is considered to match the current partial area and a variable "Match" which indicates the number of matching partial areas is incremented, step 530. It will thus be clear that an exhaustive check of all the different positions of the reference partial area in relation to the current partial area only needs to be done in cases where the reference partial area matches the current partial area in the relative position which is last checked, or in cases where the reference partial area does not match the current partial area at all.

After the Match variable has been incremented, a check is made to ascertain if its value is greater than or equal to a second threshold value "Threshold 2" which indicates the number of matching partial areas needed for the current fingerprint to be considered as coming from the same person as the reference fingerprint data, step 535. If the value of the match variable is greater than or equal to the second threshold value, the fingerprint is accepted and the person's identity is considered as verified, step 540. There does not therefore have to be an exhaustive search of all the partial areas; instead, as soon as the second threshold value is reached, the person's identity is considered as verified. If the value of the match variable is less than the second threshold value, step 545 involves establishing whether the check of the partial areas is finished. The check may be finished on account of the fact that there are no more partial areas to be checked, but it may also be finished on account of the fact that there are so few partial areas remaining to be checked that the condition in step 535 can never be satisfied. If the check is finished, the fingerprint is rejected, step 550, on account of the fact that the person's identity cannot be considered as verified. If the check is not finished, the next partial area is checked, step 555, after which the flow proceeds to step 510.

### Alternative Embodiments

The invention has been described above with reference to a smart card. However, the invention can be applied in all situations where a smaller partial area of a fingerprint is to be compared with a larger partial area of a fingerprint in order to determine if the smaller partial area corresponds anywhere within the larger partial area.

The comparison does not need to take place on a smart card, and instead it can also take place in any other unit in which it is desirable to increase the speed of the comparison.

The comparison has been described above as points being calculated on the basis of the bit values for pixels in two partial areas. However, the comparison can be done in other ways which also result in a measure of the likeness between the partial areas, for example by some form of correlation between the images. The partial areas do not need to consist of bit maps but can instead be gray scale images or even color images.

It has been stated above that the method is used for verification. However, it can also be used for identification. For example, several sets of reference fingerprint data for several different persons can be stored on the smart card, in which case a comparison is carried out until a matching identity is found or until all the reference fingerprint data has been compared with the current fingerprint data.

It has been stated above that the reference partial area is moved in relation to the current partial area in the comparison between them. Of course, it can equally be the current partial area that is moved in relation to the reference partial area. It is the relative movement between them which is of interest.

It has also been described above that the reference partial area is compared with the current partial area in all conceivable relative positions where the reference partial area overlaps the current partial area. However, it is also possible to carry out the comparison in a limited number of the conceivable relative positions. For this purpose, it is possible to use an offset parameter which indicates in how many positions in each direction from the centered position the comparison is to be carried out.

## Claims

1. A method for checking if a current fingerprint belongs to a person for whom reference fingerprint data has previously been stored, which reference fingerprint data includes a plurality of partial areas, which are designated as reference partial areas (24), of a digital representation (20) of the person's fingerprint, in which method at least some of the reference partial areas (24) are compared with corresponding current partial areas (28) of a digital representation (28) of the current fingerprint, in order to check their likeness, comprising:
comparing one of the reference partial areas (24) with one of the current partial areas (20) in different predetermined relative positions until a relative position is found for which a first predetermined requirement of likeness between the reference partial area (24) and the current partial area (20) is satisfied or until all predetermined relative positions have been compared;
recording, when said relative position is found for which the first predetermined requirement of likeness is satisfied, that the reference partial area (24) matches the current partial area (28); and
interrupting the comparison of the reference partial area (24) and the current partial area (28), **characterized in that**
the reference partial areas (24) are compared with the current partial areas (28) in a first phase (400) and a second phase (420), the second phase (420) being carried out only if the comparison in the first phase (400) indicates that the current fingerprint (26) belongs to the same person as the reference fingerprint data (20), and
the comparison in the first phase (400) is carried out with the aid of only a sub-area (24a) of the reference partial areas (24), while the comparison in the second phase is carried out for complete reference partial areas (24, 24a).

2. The method as claimed in claim 1, in which the comparison is begun in the relative position where it is most probable that the first predetermined requirement of likeness will be satisfied.

3. The method as claimed in claim 1 or 2, in which the comparison is carried out in relative positions where the reference partial area (24) is situated near the center of the current partial area (28) before relative positions where the reference partial area (24) is situated at the edges of the current partial area (28).

4. The method as claimed in claim 1, 2 or 3, in which the comparison is begun in a relative position where the reference partial area (24) is centered in relation to the current partial area (28).

5. The method as claimed in claim 1, further comprising the step of repeating (525), if the first predetermined requirement of likeness is not satisfied after a comparison in a relative position, the comparison in an altered relative position in which the position of the reference partial area in relation to the current partial area is as centered as possible.

6. The method as claimed in any one of the preceding claims, in which the reference partial area (24) is compared with the current partial area (28) in successive positions which essentially form a spiral shape.

7. The method as claimed in any one of the preceding claims, further comprising the step of repeating (555) the comparison for further of the reference partial areas (24) and the current partial areas (28) until a predetermined number of reference partial areas which match their respective current partial areas have been recorded.

8. The method as claimed in claim 7, further comprising the step of interrupting (450, 460) the repetition of the comparison as soon as the number of remaining reference partial areas for which the comparison has not yet been carried out, but is intended to be carried out, is such that said predetermined number is unattainable.

9. The method as claimed in any one of the preceding claims, in which the comparison in the first phase (400) is carried out in the same way as the comparison in the second phase (420).

10. The method as claimed in any one of the preceding claims, in which the first predetermined requirement of likeness is lower in the comparison in the first phase (400) than it is in the second phase (420).

11. The method as claimed in any one of the preceding claims, in which the current partial areas (24) are larger than the reference partial areas (24).

12. A computer program including program code which, when executed in a computer, is arranged to make the computer carry out a method according to any one of claims 1-11.

13. A storage medium on which a computer program according to claim 12 is stored.

14. A device for checking if a current fingerprint belongs to a person for whom reference fingerprint data (20) has previously been stored, which device includes a memory (7) which stores the reference fingerprint data (20) in the form of partial areas, which are designated as reference partial areas (24), of a digital representation of the person's fingerprint; and a signal-processing unit (6) which is arranged to compare at least some of the reference partial areas (24) with corresponding current partial areas (28) of a digital representation of the current fingerprint in order to check their likeness, wherein the signal-processing unit (6) is further arranged to
compare one of the reference partial areas (29) with one of the current partial areas (28) in different predetermined relative positions until a relative position is found for which a first predetermined requirement of likeness between the reference partial area (24) and the current partial area (28) is satisfied or until all predetermined relative positions have been compared;
to record, when said relative position is found, for which a first predetermined requirement of likeness is satisfied, that the reference partial area matches the current partial area; and
to interrupt the comparison of the reference partial area and the current partial area, **characterized in that**
the signal processing unit (6) is arranged to compare the reference partial areas (24) with the current partial areas (28) in a first phase (400) and a second phase (420), the second phase (420) being carried out only if the comparison in the first phase (400) indicates that the current fingerprint (26) belongs to the same person as the reference fingerprint data (20), and
the signal processing unit (6) is arranged to carry out the comparison in the first phase (400) with the aid of only a sub-area (24a) of the reference partial areas, while the comparison in the second phase (420) is carried out for complete reference partial areas (24).

15. The device as claimed in claim 14, said device being a portable data carrier (4).

16. The device as claimed in claim 14 or 15, said device being a smart card.

17. The device as claimed in any one of claims 14-16, said device being a smart card of the Java type.

## Patentansprüche

1. Verfahren, mit dem geprüft wird, ob ein aktueller Fingerabdruck zu einer Person gehört, für die zuvor Bezugs-Fingerabdruckdaten gespeichert worden sind, wobei die Bezugs-Fingerabdruckdaten eine Vielzahl als Bezugs-Teilbereiche (24) bestimmter Teilbereiche (24) einer digitalen Darstellung (20) des Fingerabdrucks der Person enthalten, und wobei bei dem Verfahren wenigstens einige der Bezugs-Teilbereiche (24) mit entsprechenden aktuellen Teilbereichen (28) einer digitalen Darstellung (28) des aktuellen Fingerabdrucks verglichen werden, um ihre Ähnlichkeit zu prüfen, wobei es umfasst:
Vergleichen eines der Bezugs-Teilbereiche (24) mit einem der aktuellen Teilbereiche (28) an verschiedenen vorgegebenen relativen Positionen, bis eine relative Position gefunden ist, für die eine erste vorgegebene Anforderung von Ähnlichkeit zwischen dem Bezugs-Teilbereich (24) und dem aktuellen Teilbereich (28) erfüllt ist, oder bis alle vorgegebenen relativen Positionen verglichen worden sind;
Aufzeichnen, dass der Bezugs-Teilbereich (24) mit dem aktuellen Teilbereich (28) übereinstimmt, wenn die relative Position ermittelt ist, für die die erste vorgegebene Anforderung von Ähnlichkeit erfüllt ist; und
Unterbrechen des Vergleichs des Bezugs-Teilbereiches (24) und des aktuellen Teilbereiches (28),
**dadurch gekennzeichnet, dass**
die Bezugs-Teilbereiche (24) mit den aktuellen Teilbereichen (28) in einer ersten Phase (400) und einer zweiten Phase (420) verglichen werden, wobei die zweite Phase (420) nur ausgeführt wird, wenn der Vergleich in der ersten Phase (400) anzeigt, dass der aktuelle Fingerabdruck (26) zu der gleichen Person gehört wie die Bezugs-Fingerabdruckdaten (20), und
der Vergleich in der ersten Phase (400) mit Hilfe lediglich eines Unterbereiches (24a) der Bezugs-Teilbereiche (24) ausgeführt wird, während der Vergleich in der zweiten Phase für vollständige Bezugs-Teilbereiche (24, 24a) ausgeführt wird.

2. Verfahren nach Anspruch 1, wobei der Vergleich an der relativen Position begonnen wird, an der es am wahrscheinlichsten ist, dass die erste vorgegebene Anforderung von Ähnlichkeit erfüllt wird.

3. Verfahren nach Anspruch 1 oder 2, wobei der Vergleich an relativen Positionen, an denen sich der Bezugs-Teilbereich (24) in der Nähe der Mitte des aktuellen Teilbereiches (28) befindet, vor relativen Positionen ausgeführt wird, an denen sich der Bezugs-Teilbereich (24) an den Rändern des aktuellen Teilbereiches (28) befindet.

4. Verfahren nach Anspruch 1, 2 oder 3, wobei der Vergleich an einer relativen Position begonnen wird, an der der Bezugs-Teilbereich (24) in Bezug auf den aktuellen Teilbereich (28) zentriert ist.

5. Verfahren nach Anspruch 1, das des Weiteren den Schritt des Wiederholens (525) des Vergleichs an einer veränderten relativen Position umfasst, an der die Position des Bezugs-Teilbereiches in Bezug auf den aktuellen Teilbereich soweit wie möglich zentriert ist, wenn die erste vorgegebene Anforderung von Ähnlichkeit nach einem Vergleich an einer relativen Position nicht erfüllt ist.

6. Verfahren nach einem der vorangehenden Ansprüche, wobei der Bezugs-Teilbereich (24) mit dem aktuellen Teilbereich (28) an aufeinanderfolgenden Positionen verglichen wird, die im Wesentlichen eine Spiralform bilden.

7. Verfahren nach einem der vorangehenden Ansprüche, das des Weiteren den Schritt des Wiederholens (555) des Vergleichs für weitere der Bezugs-Teilbereiche (24) und die aktuellen Teilbereiche (28) umfasst, bis eine vorgegebene Anzahl von Bezugs-Teilbereichen, die mit ihren jeweiligen aktuellen Teilbereichen übereinstimmen, aufgezeichnet worden sind.

8. Verfahren nach Anspruch 7, das des Weiteren den Schritt des Unterbrechens (450, 460) des Wiederholens des Vergleichs umfasst, sobald die Anzahl verbleibender Bezugs-Teilbereiche, für die der Vergleich noch nicht ausgeführt worden ist, jedoch ausgeführt werden soll, so ist, dass die vorgegebene Anzahl nicht erreicht werden kann.

9. Verfahren nach einem der vorangehenden Ansprüche, wobei der Vergleich in der ersten Phase (400) auf die gleiche Weise ausgeführt wird wie der Vergleich in der zweiten Phase (420).

10. Verfahren nach einem der vorangehenden Ansprüche, wobei die erste vorgegebene Anforderung von Ähnlichkeit bei dem Vergleich in der ersten Phase (400) niedriger ist als in der zweiten Phase (420).

11. Verfahren nach einem der vorangehenden Ansprüche, wobei die aktuellen Teilbereiche (28) größer sind als die Bezugs-Teilbereiche (24).

12. Computerprogramm, das Programmcode enthält, der, wenn er auf einem Computer ausgeführt wird, so eingerichtet ist, dass er den Computer ein Verfahren nach einem der Ansprüche 1 - 11 ausführen lässt.

13. Speichermedium, auf dem ein Computerprogramm nach Anspruch 12 gespeichert ist.

14. Vorrichtung, mit der geprüft wird, ob ein aktueller Fingerabdruck zu einer Person gehört, für die zuvor Bezugs-Fingerabdruckdaten(20) gespeichert worden sind, wobei die Vorrichtung einen Speicher (7), der die Bezugs-Fingerabdruckdaten (20) in Form als Bezugs-Teilbereiche (24) bestimmter Teilbereiche, einer digitalen Darstellung des Fingerabdrucks der Person speichert, und eine Signalverarbeitungseinheit (6) enthält, die so eingerichtet ist, dass sie wenigstens einige der Bezugs-Teilbereiche (24) mit entsprechenden aktuellen Teilbereichen (28) einer digitalen Darstellung des aktuellen Fingerabdrucks vergleicht, um ihre Ähnlichkeit zu prüfen, wobei die Signalverarbeitungseinheit (6) des Weiteren so eingerichtet ist, dass sie:
einen der Bezugs-Teilbereiche (29) mit einem der aktuellen Teilbereiche (28) an verschiedenen vorgegebenen relativen Positionen vergleicht, bis eine relative Position gefunden ist, für die eine erste vorgegebene Anforderung von Ähnlichkeit zwischen dem Bezugs-Teilbereich (24) und dem aktuellen Teilbereich (28) erfüllt ist, oder bis alle vorgegebenen relativen Positionen verglichen worden sind;
wenn die relative Position ermittelt ist, für die eine erste vorgegebene Anforderung von Ähnlichkeit erfüllt ist, aufzeichnet, dass der Bezugs-Teilbereich dem aktuellen Teilbereich entspricht; und
den Vergleich des Bezugs-Teilbereiches und des aktuellen Teilbereiches unterbricht,
**dadurch gekennzeichnet, dass**
die Signalverarbeitungseinheit (6) so eingerichtet ist, dass sie die Bezugs-Teilbereiche (24) mit den aktuellen Teilbereichen (28) in einer ersten Phase (400) und in einer zweiten Phase (420) vergleicht, wobei die zweite Phase (420) nur ausgeführt wird, wenn der Vergleich in der ersten Phase (400) anzeigt, dass der aktuelle Fingerabdruck (26) zu der gleichen Person gehört wie die Bezugs-Fingerabdruckdaten (20), und
die Signalverarbeitungseinheit (16) so eingerichtet ist, dass sie den Vergleich in der ersten Phase (400) mit Hilfe lediglich eines Unterbereiches (24a) der Bezugs-Teilbereiche ausführt, während der Vergleich in der zweiten Phase (420) für vollständige Bezugs-Teilbereiche (24) ausgeführt wird.

15. Vorrichtung nach Anspruch 14, wobei die Vorrichtung ein tragbarer Datenträger (4) ist.

16. Vorrichtung nach Anspruch 14 oder 15, wobei die Vorrichtung eine Smart Card ist.

17. Vorrichtung nach einem der Ansprüche 14-16, wobei die Vorrichtung eine Smart Card des Java-Typs ist.

## Revendications

1. Procédé servant à vérifier qu'une empreinte digitale actuelle appartient à une personne dont les données d'empreinte digitale de référence ont été auparavant stockées, lesquelles données d'empreinte digitale de référence comprennent une pluralité de zones partielles, qui sont désignées comme des zones partielles de référence (24) d'une représentation numérique (20) de l'empreinte digitale de la personne, dans lequel procédé au moins certaines des zones partielles de référence (24) sont comparées aux zones partielles actuelles correspondantes (28) d'une représentation numérique (20) de l'empreinte digitale actuelle, afin de vérifier leur ressemblance, comprenant :
la comparaison d'une des zones partielles de référence (24) à une des zones partielles actuelles (28) dans des positions relatives prédéterminées différentes jusqu'à ce qu'une position relative soit trouvée pour laquelle une première condition de ressemblance prédéterminée entre la zone partielle de référence (24) et la zone partielle actuelle (28) est satisfaite ou jusqu'à ce que toutes les positions relatives prédéterminées aient été comparées ;
l'enregistrement, lorsque ladite position relative est trouvée pour laquelle la première condition de ressemblance prédéterminée est satisfaite, du fait que la zone partielle de référence (24) corresponde à la zone partielle actuelle (28) ; et
l'interruption de la comparaison de la zone partielle de référence (24) et de la zone partielle actuelle (28),
**caractérisé en ce que**
les zones partielles de référence (24) sont comparées aux zones partielles actuelles (28) lors d'une première phase (400) et d'une deuxième phase (420), la deuxième phase (420) étant accomplie uniquement si la comparaison lors de la première phase (400) indique que l'empreinte digital actuelle (26) appartient à la même personne que les données d'empreinte digitale de référence (20), et
la comparaison lors de la première phase (400) est accomplie à l'aide de seulement une sous-zone (24a) des zones partielles de référence (24), alors que la comparaison lors de la deuxième phase est accomplie pour les zones partielles de référence totales (24, 24a).

2. Procédé selon la revendication 1, dans lequel la comparaison débute dans la position relative où il est très probable que la première condition de ressemblance prédéterminée soit satisfaite.

3. Procédé selon la revendication 1 ou 2, dans lequel la comparaison est effectuée dans des positions relatives où la zone partielle de référence (24) est située près du centre de la zone partielle actuelle (28) avant des positions relatives où la zone partielle de référence (24) est située au niveau des bords de la zone partielle actuelle (28).

4. Procédé selon la revendication 1, 2 ou 3, dans lequel la comparaison débute dans une position relative où la zone partielle de référence (24) est centrée par rapport à la zone partielle actuelle (28).

5. Procédé selon la revendication 1, comprenant en outre l'étape consistant à répéter (525), si la première condition de ressemblance prédéterminée n'est pas satisfaite après une comparaison dans une position relative, la comparaison dans une position relative modifiée dans laquelle la position de la zone partielle de référence par rapport à la zone partielle actuelle est aussi centrée que possible.

6. Procédé selon l'une quelconque des revendications précédentes, dans lequel la zone partielle de référence (24) est comparée à la zone partielle actuelle (28) dans des positions successives qui constituent essentiellement une forme de spirale.

7. Procédé selon l'une quelconque des revendications précédentes, comprenant en outre l'étape consistant à répéter (555) la comparaison pour d'autres zones partielles de référence (24) et les zones partielles actuelles (28) jusqu'à ce qu'un nombre prédéterminé de zones partielles de référence qui correspondent à leurs zones partielles actuelles respectives ait été enregistré.

8. Procédé selon la revendication 7, comprenant en outre l'étape consistant à interrompre (450, 460) la répétition de la comparaison dès que le nombre de zones partielles de référence restantes pour lesquelles la comparaison n'a pas encore été effectuée, mais qui doit être effectuée, est tel que ledit nombre prédéterminé est inatteignable.

9. Procédé selon l'une quelconque des revendications précédentes, dans lequel la comparaison lors de la première phase (400) est effectuée de la même manière que la comparaison lors de la deuxième phase (420).

10. Procédé selon l'une quelconque des revendications précédentes, dans lequel la première condition de ressemblance prédéterminée est plus faible dans la comparaison lors de la première phase (400) qu'elle ne l'est lors de la deuxième phase (420).

11. Procédé selon l'une quelconque des revendications précédentes, dans lequel les zones partielles actuelles (28) sont plus grandes que les zones partielles de référence (24).

12. Programme informatique comprenant un code de programme qui, lorsqu'il est exécuté sur un ordinateur, est agencé pour permettre à l'ordinateur de réaliser un procédé conforme à l'une quelconque des revendications 1 à 11.

13. Support de stockage sur lequel un programme informatique conforme à la revendication 12 est stocké.

14. Dispositif servant à vérifier qu'une empreinte digitale actuelle appartient à une personne dont les données d'empreinte digitale de référence (20) ont été auparavant stockées, lequel dispositif comprend une mémoire (7) qui stocke les données d'empreinte digitale de référence (20) sous la forme de zones partielles, qui sont désignées comme des zones partielles de référence (24) d'une représentation numérique de l'empreinte digitale de la personne ; et une unité de traitement du signal (6) qui est agencée pour comparer au moins certaines des zones partielles de référence (24) aux zones partielles actuelles correspondantes (28) d'une représentation numérique de l'empreinte digitale actuelle afin de vérifier leur ressemblance, dans lequel l'unité de traitement du signal (6) est en outre agencée pour
comparer une des zones partielles de référence (24) à l'une des zones partielles actuelles (28) dans des positions relatives prédéterminées différentes jusqu'à ce qu'une position relative soit trouvée pour laquelle une première condition de ressemblance prédéterminée entre la zone partielle de référence (24) et la zone partielle actuelle (28) est satisfaite ou jusqu'à ce que toutes les positions relatives prédéterminées aient été comparées ;
enregistrer, lorsque ladite position relative est trouvée, pour laquelle une première condition de ressemblance prédéterminée est satisfaite, le fait que la zone partielle de référence corresponde à la zone partielle actuelle ; et
interrompre la comparaison de la zone partielle de référence et de la zone partielle actuelle,
**caractérisé en ce que**
l'unité de traitement du signal (6) est agencée pour comparer les zones partielles de référence (24) aux zones partielles actuelles (28) lors d'une première phase (400) et lors d'une deuxième phase (420), la deuxième phase (420) étant accomplie uniquement si la comparaison lors de la première phase (400) indique que l'empreinte digitale actuelle (26) appartient à la même personne que les données d'empreinte digitale de référence (20), et
l'unité de traitement du signal (6) est agencée pour effectuer la comparaison lors de la première phase (400) à l'aide de seulement une sous-zone (24a) des zones partielles de référence, alors que la comparaison lors de la deuxième phase (420) est effectuée pour les zones partielles de référence totales (24).

15. Dispositif selon la revendication 14, ledit dispositif étant un support d'informations portable (4).

16. Dispositif selon la revendication 14 ou 15, ledit dispositif étant une carte à puce.

17. Dispositif selon l'une quelconque des revendications 14-16, ledit dispositif étant une carte à puce du type Java.
